(19) Europäisches Patentamt
European Patent Office
Office européen des brevets

(11) **EP 2 134 425 B1**

(12) **EUROPÄISCHE PATENTSCHRIFT**

(45) Veröffentlichungstag und Bekanntmachung des Hinweises auf die Patenterteilung:
**29.06.2011 Patentblatt 2011/26**

(21) Anmeldenummer: 08714759.1

(22) Anmeldetag: **14.03.2008**

(51) Int Cl.:
*A63B 22/02* (2006.01)   *B29D 29/00* (2006.01)
*B65G 15/34* (2006.01)

(86) Internationale Anmeldenummer:
**PCT/CH2008/000109**

(87) Internationale Veröffentlichungsnummer:
**WO 2008/113195 (25.09.2008 Gazette 2008/39)**

(54) **LAUFBAND MIT EINER SCHICHT AUS THERMOPLASTISCHEM SCHAUM**

TREADMILL BELT WITH LAYER OF THERMOPLASTIC FOAMED MATERIAL

TAPIS ROULANT DOTÉ D'UNE COUCHE DE MOUSSE THERMOPLASTIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.03.2007 CH 4562007**

(43) Veröffentlichungstag der Anmeldung:
**23.12.2009 Patentblatt 2009/52**

(73) Patentinhaber: **Habasit AG**
**4153 Reinach (CH)**

(72) Erfinder:
• **ROHR, Stefan**
**CH-4146 Hochwald (CH)**
• **WRIGHT, Marshall**
**CH-4244 Röschenz (CH)**
• **LÜSCHER, Heinz**
**CH-4153 Reinach (CH)**
• **OTTE, Frank**
**79400 Kandern (DE)**
• **VON GELLHORN, Edgar**
**CH-5643 Sins (CH)**

(74) Vertreter: **Bohest AG**
**Postfach 160**
**4003 Basel (CH)**

(56) Entgegenhaltungen:
**EP-A2- 0 695 827    US-A- 5 708 060**
**US-A- 5 951 441    US-A1- 2004 132 586**

## Beschreibung

Die vorliegende Erfindung betrifft Laufbänder für Lauftrainingsgeräte.

Lauftrainingsgeräte werden üblicherweise in Fitness-Studios aufgestellt. Sie ermöglichen es einem Benutzer, ein Lauf- oder Renntraining durchzuführen, ohne dass eine Laufstrecke im Freien benötigt wird. Der Benutzer geht oder rennt dabei auf einem endlos umlaufenden Laufband, das motorisch mit frei wählbarer Geschwindigkeit angetrieben werden kann, um ein Gehen oder Rennen mit unterschiedlichen Geschwindigkeiten zu simulieren.

In der US-A-5,951,441 wird ein solches endloses Laufband beschrieben, das zwischen einer Kissenlage und einer Basislage, enthaltend eine Gewebeschicht, eine Verstärkungsschicht aufweist, die ein lokales scherendes Verschieben der Basislage in ihrer Ebene verhindert und diese versteift. Die Kissenlage kann ein organisches komprimierbares Schaummaterial enthalten, etwa aus Neopren, PVC-Schaum oder quervernetztem Polyethylen. Das Endlosmachen des Laufbandes geschieht vor dem Aufbringen der Kissenlage.

In der US-A-2006/0287147 wird ein weiteres endloses Laufband beschrieben, das u.a. eine obere und untere Lage aufweist, die aus nichtgewebtem oder gewebtem Material bestehen können, und das zwischen der oberen und unteren Lage ein polymeres Gel und ein Substrat enthält, das aus einem geschäumten Kunststoff bestehen kann. Das Endlosmachen des Laufbandes geschieht durch Verbinden der Enden der oberen und unteren Lage mittels Verschweissen (sofern das Material dieser Lagen schmelzbar ist), oder mittels zusätzlichem Kleber oder mittels mechanischem Verbinden wie etwa Nähen.

Laufbänder sind wie gesagt endlos. Das Endlosmachen sollte so erfolgen, dass danach an der verbindungsstelle keine Unebenheiten vorhanden sind, da diese optisch unansehnlich sind.

Eine für Laufbänder schon eingesetzte Endverbindung, die nur unwesentliche Unebenheiten zurücklässt, ist die Fingerendverbindung (siehe Figur 4 der oben zitierten US-A-5, 951, 441) .

Auf dem Gebiet der endlosen Förderbänder ist auch eine als "Stufenverbindung" bezeichnete Endverbindung bekannt. Bei dieser Endverbindung werden die Enden stufenförmig zugeschnitten (mit stufenförmig ausgebildetem Profil, wenn das Ende von der Seite her betrachtet wird). Durch die Ausbildung der Stufe vergrössert sich, je nach Länge der Stufe in Längsrichtung des Bandes, die verklebbare Kontaktfläche zwischen den beiden Enden und somit die Festigkeit der fertigen Endverbindung; ohne Ausbildung der Stufen stünden nur gerade die Stirnflächen der Enden als verklebbare Flächen zur Verfügung (diese sind zu klein, da die Bänder dünn sind). Man kann eine Stufenverbindung mit einer zusätzlichen Überlappung der Enden ausführen, wodurch die verklebbare Kontaktfläche weiter vergrössert wird. In dem Fall muss die Stufenhöhe unabhängig vom Schichtaufbau des Bandes genau auf die halbe Banddicke festgelegt werden; ansonsten können die Enden nicht mehr richtig aneinander gefügt werden. Bei einem solchen Zusammenfügen der Enden mit zusätzlicher Überlappung weist das Förderband nach dem Zusammenfügen der Enden an der Überlappungsstelle zunächst (d.h. vor dem Verbinden der Enden) eine vergrösserte Dicke auf, die das 1,5-fache der Banddicke ist. Gleichzeitig entsteht beim Zusammenfügen dieser Enden mit zusätzlicher Überlappung an der Fügestelle im Inneren des Bandes zunächst ein Hohlraum. Beim Verbinden der Enden, das typisch unter Hitze und Druck geschieht, wird der Hohlraum durch Zusammendrücken der Enden zwar wieder geschlossen; die vergrösserte Dicke an den beiden Überlappungsstellen kann aber nur noch teilweise dadurch zurückkorrigiert werden, indem überschüssiges Material, sofern es duktil ist, seitlich aus dem Förderband herausgedrückt wird. Nach dem Verbinden bleibt also an den beiden Überlappungsstellen je ein erhöhter, optisch unansehnlicher Materialwulst bestehen.

Die vorliegende Erfindung setzt sich die Aufgabe, ein endloses Laufband bereitzustellen, das einfacher endlos gemacht werden kann als die vorbekannten Laufbänder und dessen Endverbindung optisch ansehnlich ist.

Die Aufgabe wird erfindungsgemäss gelöst durch ein endloses Laufband, umfassend eine endlose erste geschäumte Schicht aus einem thermoplastischen Schaum, mit einer Oberseite und einer Unterseite, wobei auf der Unterseite ein erster Zugkörper, umfassend eine erste textile Schicht und eine Zugkörperunterseite, angeordnet ist, und wobei zwischen der endlosen geschäumten ersten Schicht und dem ersten Zugkörper keine Schicht angeordnet ist, die ein lokales scherendes Verschieben des ersten Zugkörpers parallel zur Unterseite verhindert oder diesen versteift.

Bevorzugte Ausführungsformen der Erfindung ergeben sich aus den abhängigen Ansprüchen. Insbesondere ist es bevorzugt, wenn das Laufband zwei Zugkörper aufweist, einen an der Unterseite der ersten geschäumten Schicht und einen zweiten an ihrer Oberseite.

Es wurde überraschenderweise gefunden, dass sich die Enden von Laufbändern mit dem eingangs erwähnten Schichtaufbau, aber mit wie vorstehend als bevorzugt angetönt zwei Zugkörpern, unter Verwendung der besagten Stufenverbindung mit einer zusätzlichen Überlappung unter direktem Verschweissen der ersten geschäumten Schicht und/oder unter Verwendung des Materials der geschäumten ersten Schicht als Schmelzkleber verkleben lassen, wobei völlig flache Endverbindungen ohne Materialwülste erhalten werden. Es wird vermutet, dass der thermoplastische Schaum der ersten geschäumten Schicht beim Verbinden der abgestuften Enden unter Hitze und Druck einerseits an den beiden Überlappungsstellen gerade so stark komprimiert werden, dass die an den Überlappungsstellen anfänglich vorhandene, vergrösserte Dicke sich an die Laufbanddicke angleicht, ohne dass hierzu noch ein seitliches Verdrängen von überschüssigem Material erforderlich ist. Durch die Verwendung einer geschäumten ersten Schicht sind auch geringere Drücke und Temperaturen erforderlich, um die Endverbindungen mit der geforderten Ebenheit herzustellen.

Es wurde des Weiteren gefunden, dass sich Laufbänder der eingangs erwähnten Art mit nur einem Zugkörper unter Verwendung der Fingerendverbindung, ohne Überlappung, endverbinden lassen, wobei trotz der besagten Komprimierbarkeit des thermoplastischen Schaums der ersten geschäumten Schicht an der Endverbindung keine Einbuchtung entsteht, so dass sie ebenfalls optisch völlig glatt ist.

Es wurde des Weiteren für alle Typen des erfindungsgemässen Laufbandes gefunden, dass sie keine Schicht zwischen erster geschäumter Schicht und erstem Zugkörper benötigen, die ein lokales scherendes Verschieben des ersten Zugkörpers parallel zu seiner Unterseite verhindert, oder die den ersten Zugkörper versteift; und dass bei ihnen ein separates, zusätzliches Endlosmachen des oder der Zugkörper selber nicht mehr erforderlich ist. Ebenso wurde für alle Typen des erfindungsgemässen Laufbandes gefunden, dass sich der thermoplastische Schaum beim Erhitzen, das für das Endverbinden erforderlich ist, nicht ausdehnt, so dass keine Wölbungen entstehen.

Die erfindungsgemässen Laufbänder weisen eine endlose geschäumte erste Schicht auf. Diese Schicht kann beispielsweise durch direktes Verschweissen endlos gemacht werden, oder indem das Material der geschäumten Schicht als Schmelzkleber zum Verbinden dient, wobei wahlweise ein zusätzlicher Kleber, etwa ein zusätzlicher Schmelzkleber, mitverwendet werden kann. Bevorzugt ist das Verschweissen oder Verkleben ohne Mitverwendung eines zusätzlichen Klebers. In diesen beiden bevorzugten Fällen besteht die Fügestelle, die beim Verbinden der beiden Enden zur endlosen geschäumten Schicht entsteht, aus demselben Material, das auch den thermoplastischen Schaum bildet.

Für alle Lagen des erfindungsgemässen Laufbandes, die einen thermoplastischen Schaum aufweisen, insbesondere für die erste geschäumte Schicht, sind Beispiele für darin erfindungsgemäss einsetzbare Thermoplasten: PA wie etwa PA 6, PA 11, PA 12, PA 66, PA 69, PA 610, PA 612, PA 6T, PA 6-3-T, PA MXD6, TPE-A wie etwa PEBA (Polyetherblockamide, hier insbesondere Poly(poly{tetramethylenethylenglykol}-b-poly{ω-laurinlactam}), Poly(poly{tetramethylenethylenglykol}-b-poly{ε-caprolactam}), Poly(polyethylenoxid-b-poly{ω-laurinlactam}) und Poly(polyethylenoxid-b-poly{ε-caprolactam}); PE wie etwa PET oder PBT; TPE-E wie etwa Poly(poly{tetradecakis[oxytetramethylen]oxyterephthaloyl}-b-poly{oxytetramethylenoxyterephthaloyl}); zur Herstellung von Weichschaumstoffen geeignete TPU; TPE-U, hier insbesondere Copolymere von Polyesterdiolen oder Polyetherdiolen mit Diisocyanaten, oder TPE-U auf Basis von Polycarbonat. Das Polyesterdiol kann aus Adipinsäure und Butandiol gebildet sein, das Polyetherdiol kann etwa ein Polyadditionsaddukt von Ethylenoxid und/oder Propylenoxid sein, und das Diisocyanat kann insbesondere Diphenylmethan-4,4'-diisocyanat sein. Das TPE-U kann auch ein TPE-U auf Basis von Polycarbonat sein. Weitere Beispiele von Thermoplasten sind TPO wie etwa Polyethylen und Copolymere des Ethylens mit einem weiteren olefinischen Monomeren, das aus $(C_3-C_{12})$-α-Olefin (hier bevorzugt $C_8$-α-Olefin), Vinylacetat, Styrol, Acrylsäure-$(C_1-C_4)$-Alkylestern und Methacrylsäure-$(C_1-C_4)$-Alkylestern ausgewählt ist; und PVC. Als "Thermoplast" eignen sich auch Blends (d.h. Mischungen) der besagten Thermoplaste, soweit sich chemisch miteinander in geschmolzenem Zustand verträglich und mischbar sind. Besonders bevorzugt sind TPU und PVC.

Die erfindungsgemäss einzusetzenden Thermoplaste können unvernetzt oder teilvernetzt sein. Der Begriff "teilvernetzt" ist so zu verstehen, dass der Vernetzungsgrad nur so stark ist, dass der Thermoplast trotzdem unzersetzt schmelzbar und schäumbar und thermoplastisch verarbeitbar ist. Vorzugsweise ist der Thermoplast unvernetzt. Die erfindungsgemäss einsetzbaren Thermoplaste sind somit keine Elastomere oder Duroplaste. Den Thermoplasten können gewünschtenfalls übliche Weichmacher zugesetzt werden.

Die geschäumten Schichten, insbesondere die geschäumte erste Schicht, enthalten jeweils einen thermoplastischen Schaum, der bevorzugt zu mindestens 50 Gewichtsprozenten, eher bevorzugt mindestens 75 Gewichtsprozenten, noch eher bevorzugt zu mindestens 90 Gewichtsprozenten und besonders bevorzugt zu mindestens 95 Gewichtsprozenten, bezogen auf die Schicht, aus einem Thermoplasten wie oben exemplifiziert besteht, wobei die restlichen Anteile in der Schicht Restanteile Treibmittel, Gas und optionale weitere Additive sind. Solche Additive sind beispielsweise:

a) Hilfsmittel zur Verbesserung der Eigenschaften der Fertigprodukte wie zum Beispiel UV- und Temperaturstabilisatoren; Flammschutzmittel; Farbmittel; antibakterielle oder schimmeltötende Zusätze; und

b) Füllstoffe als Streckmittel zur Einsparung von Kunststoffen und dadurch zur Kostensenkung und/oder zum Verändern der elektrischen Leitfähigkeit und Masshaltigkeit und/oder zur Verringerung der thermische Ausdehnung. Insbesondere erhöhen längliche oder faserförmige Zusatzstoffe die Festigkeit.

Für die geschäumte erste Schicht ist es bevorzugt, dass sie aus einem thermoplastischen Schaum mit einem Schäumungsgrad von etwa 5 bis etwa 60 Prozenten, bevorzugt von etwa 10 bis etwa 40 Prozenten besteht. Im Rahmen der vorliegenden Erfindung definiert der "Schäumungsgrad" den volumenmässigen Anteil der Gasblasen am Gesamtvolumen des thermoplastischen Schaums. Der Schäumungsgrad ist sehr einfach über eine Messung der Dichten in geschäumtem und ungeschäumten Zustand bestimmbar:

$$r = \frac{(\rho_u - \rho_g)}{\rho_u} \times 100$$

In dieser Formel bezeichnet r den Schäumungsgrad in Prozenten, $\rho_u$ bezeichnet die Dichte des ungeschäumten Thermoplasten als homogene Mischung mit allen weiteren fakultativen Additiven wie etwa Farbstoffen, und $\rho_g$ die Dichte einer gleichen Menge derselben Thermoplastenmischung in Form des geblähten Schaums.

Die Dicke der ersten geschäumten Schicht liegt bevorzugt im Bereich von etwa 0,1 bis 1,0 mm, eher bevorzugt etwa 0,2 bis 0,6 mm.

Das erfindungsgemässe Laufband weist einen ersten Zugkörper auf, der an der Unterseite der ersten geschäumten Schicht angeordnet ist, und der ein textiles Flächengebilde enthält oder aus diesem besteht. Dieses textile Flächengebilde kann entweder ein Gewebe oder eine Maschenware (z.B. ein Gestrick oder ein Gewirk) sein; als Alternative hierzu kann es auch ein nichtgewebtes Flächengebilde wie etwa ein Vlies oder ein Gelege sein. Bevorzugt enthält der erste Zugkörper ein Gewebe oder besteht aus diesem. Als das Gewebe wiederum sind Gewebe mit Leinwand- oder Köperbindung bevorzugt. Für die Kettfäden des Gewebes ist es bevorzugt, dass es Multifilamente von etwa 200 bis 3300 dtex, eher bevorzugt etwa 500 bis 1200 dtex aufweist. Die Schussfäden können in einer bevorzugten Ausführungsform ebenfalls Multifilamente wie bei den Kettfäden exemplifiziert sein; in einer anderen bevorzugten Ausführungsform sind es Monofilamente, die typisch einen Durchmesser von etwa 0,15 bis 0,6 mm, eher bevorzugt etwa 0,25 bis 0,4 mm aufweisen. Das Material der Fäden, Garne, Fasern oder Seile der in dem ersten Zugkörper einsetzbaren textilen Flächengebilde enthält oder besteht bevorzugt aus Polyester, Polyamid, Baumwolle oder Polyethylen-naphthalat; es kann auch ein Baumwolle/Polyamid- oder Baumwolle/Polyester-Gemisch oder eine ternäre Mischung Baumwolle/Polyamid/Polyester enthalten oder aus dieser bestehen. Das textile Flächengebilde des ersten Zugkörpers kann in einen Kunststoff eingebettet oder eingegossen sein (etwa einen Kautschuk oder einen Thermoplasten wie vorstehend für die erste geschäumte Schicht exemplifiziert).

Die Dicke des ersten Zugkörpers beträgt bevorzugt etwa 0,2 bis 0,8 mm.

Die Unterseite des ersten Zugkörpers, die in der Regel diejenige Fläche ist, die auf den Rollen und dem Brett des Lauftrainingsgerätes läuft, kann zum Zweck der Reibungsverminderung mit einem üblichen Gleitmittel imprägniert oder bestrichen sein. Beispiele solcher Gleitmittel sind Polydimethylsiloxanpolymere, etwa das von der Dow Corning zum Anmeldezeitpunkt der vorliegenden Anmeldung vertriebene "Dow Corning 200® Fluid". Für ein Verfahren zum Imprägnieren des ersten Zugkörpers in einem erfindungsgemässen endlosen Laufband mit solchen Gleitmitteln kann beispielhaft auf die US-B-7,140,485 verwiesen werden.

Das erfindungsgemässe Laufband umfasst optional und bevorzugt einen zweiten Zugkörper, der auf der Oberseite der geschäumten ersten Schicht angeordnet ist. Die Angaben, die vorstehend zum ersten Zugkörper hinsichtlich der Beschaffenheit gemacht wurden, sind entsprechend auch auf den zweiten Zugkörper anwendbar, mit der Ausnahme, dass als das textile Flächengebilde im zweiten Zugkörper entweder ein Gewebe oder eine Maschenware, insbesondere hier ein Gewirk, bevorzugt ist.

Auf dem zweiten Zugkörper wiederum kann, wenn er vorhanden ist, erfindungsgemäss bevorzugt eine Oberschicht aus einem thermoplastischen Material angeordnet sein, die nicht geschäumt oder wie vorstehend erläutert geschäumt sein kann. Die Dicke dieser Oberschicht beträgt bevorzugt etwa 0,1 bis 1,0 mm. Wenn diese Oberschicht geschäumt ist, kann ihr Schaum vom Schaum in der ersten geschäumten Schicht verschieden sein oder mit diesem identisch sein. Bevorzugt ist die Oberschicht ebenfalls geschäumt.

Die oberste Schicht des erfindungsgemässen Laufbandes, die geschäumt oder ungeschäumt sein kann, ist üblicherweise die Lage, auf der der Benutzer läuft. Das kann die vorstehend erwähnte Oberschicht sein; es kann auch eine zusätzliche, auf der Oberschicht angeordnete Deckschicht sein. Diese oberste Schicht kann gewünschtenfalls auf ihrer Oberseite wie in der Technik der Laufbänder üblich mit einem Profil versehen sein, um ein Ausrutschen des Benutzers zu verhindern. Diese Profile können etwa durch Prägen aufgebracht werden. Die oberste Schicht (die Oberschicht oder Deckschicht) kann gewünschtenfalls auch antistatische Eigenschaften aufweisen. Letzteres kann, wie in der Technik üblich, durch Beimischen von pulverförmigen, faserförmigen oder fibridförmigen elektrisch leitfähigen Materialien (etwa Graphit, Aluminium, Silber, Kupfer, Nickel oder Polypyrrol) zum Material der obersten Schicht bewirkt werden.

Die Lagen des erfindungsgemässen Laufbandes sind aufeinander angeordnet. Dies bedeutet im Rahmen der vorliegenden Anmeldung, dass die Schichten entweder direkt miteinander verbunden sind, etwa unter Hitze und Druck, oder unter Mitverwendung eines Klebemittels. Wenn ein Klebemittel verwendet wird, ist dieses bevorzugt aus quervernetztem Polyurethan, Kautschuk, den Kautschukmischungen und Phenol-FormaldehydHarz ausgewählt. Wenn der zweite Zugkörper ein Gewebe enthält oder aus diesem besteht, ist es bevorzugt, dass die Anordnung des zweiten Zugkörpers auf der ersten geschäumten Schicht unter Zuhilfenahme eines zusätzlichen Klebemittels erfolgt. Wenn der zweite Zugkörper aber ein Gelege oder eine Maschenware, insbesondere ein Gewirk, enthält oder aus diesem besteht, ist es bevorzugt, dass die Anordnung des zweiten Zugkörpers auf der ersten geschäumten Schicht ohne Mitverwendung eines zusätzlichen Klebemittels, d.h. nur unter Einwirkung von Hitze und Druck, geschieht.

Die Dicken der einzelnen Lagen des Laufbandes lassen sich entweder am Laufband selber oder nach seiner Auftrennung in die einzelnen Lagen (Aufschneiden, Abfräsen oder Ablösen von Lagen) bestimmen. Es kann aber vorkommen, dass eine der Lagen nicht genügend geometrisch klare Form aufweist. In dem Fall kann man anstelle der geometrischen Dicke die Dicke h als den Quotienten aus Flächengewicht der Lage, $G_L$, (kg/m$^2$) und der massengemittelten Dichte aller im ersten Zugkörper vorkommenden Materialien, p, (kg/m$^3$) bestimmen:

$$h = \frac{G_L}{\rho} = \frac{G_L}{\dfrac{\displaystyle\sum_{i=1}^{N} m_i \rho_i}{\displaystyle\sum_{i=1}^{N} m_i}}$$

wobei $m_i$ der Massenanteil des i-ten Materials der Lage ist und wobei die Summierung über alle N Materialien geht, die in der Lage vorkommen.

Alle geschäumten Schichten des erfindungsgemässen Laufbandes, insbesondere die geschäumte erste Schicht, können durch Aufschäumen eines thermoplastischen Materials hergestellt werden.

Das Aufschäumen kann erstens unter direktem Zumischen eines Treibmittels zum thermoplastischen Material durchgeführt werden. Die Treibmittel sind einerseits physikalische Treibmittel. Beispiele für physikalische Treibmittel sind Chlorfluorkohlenwasserstoffe wie etwa Frigen, Kaltron, Freon, Frigen, R11 und R12; Hydrofluoralkane wie etwa HFA 134 oder HFA 227; und aliphatische lineare, verzweigte oder cyclische (C$_4$-C$_8$)-Kohlenwasserstoffe wie etwa C$_5$-Kohlenwasserstoffe (etwa n-Pentan, iso-Pentan, Neopentan, Cyclopentan); C$_6$-Kohlenwasserstoffe (etwa n-Hexan, iso-Hexan, Methylcyclopentan, Cyclohexan), C$_7$-Kohlenwasserstoffe (etwa n-Heptan, iso-Heptan, Methylcyclohexan, Cycloheptan) und C$_8$-Kohlenwasserstoffe (etwa Oktan, Cyclooktan, iso-Oktan, 1,2-, 1,3- oder 1,4-Dimethylcyclohexan). Diese Kohlenwasserstoffe können in reiner Form oder als Kohlenwasserstofffraktion mit entsprechend eingegrenztem Siedebereich, in dem die jeweiligen Kohlenwasserstoffe mehr oder weniger dominant vorkommen (Petroletherfraktionen), eingesetzt werden. Weitere Beispiele sind Treibmittel, die bei Raumtemperatur, d.h.

etwa 25°C, gasförmig sind, z.B. N$_2$, CO$_2$, Methan oder Argon; Wasser; halogenierte Kohlenwasserstoffe wie etwa Dichlormethan, Perchlorethylen und 1,1,1-Trichlorethan; und tiefsiedende (d.h. im Siedebereich von etwa 60-100°C siedende) Alkohole wie etwa Methanol, Ethanol, Propanol, iso-Propanol und tert-Butanol. Andererseits können die Treibmittel auch chemische Treibmittel sein; chemische Treibmittel setzen das blähende Gas, insbesondere Stickstoff oder Kohlendioxid, erst beim Erhitzen frei. Beispiele für einsetzbare chemische Treibmittel sind Azoverbindungen, wie etwa AIBN; Hydrazinderivate, wie etwa Benzolsulfonylhydrazin; N-Nitrosoverbindungen; und leicht decarboxylierbare Carbonsäuren wie etwa β-Ketocarbonsäuren. Erfindungsgemäss bevorzugt sind physikalische Treibmittel. Bevorzugt wird die Art des Treibmittels so gewählt, dass es sich möglichst leicht mit dem zu schäumenden thermoplastischen Material vermischt. Das bedeutet, dass z.B. für apolare thermoplastische Materialien ein apolares Treibmittel wie etwa eines der obigen gasförmigen Treibmittel oder einer der obigen Kohlenwasserstoffe oder Fluorchlorkohlenwasserstoffe verwendet wird. Andererseits kann für einen eher polaren oder hydrophilen Thermoplasten Wasser oder einer der obigen Alkohole als Treibmittel verwendet werden. Die Menge des Treibmittels ist in erster Linie vom gewünschten Schäumungsgrad bestimmt. Sie kann bevorzugt im Bereich von etwa 1 bis etwa 10 Gewichtsprozenten, bezogen auf die Gesamtmenge des zu schäumenden Thermoplasten, liegen.

Das Aufschäumen kann zweitens auch unter Hinzumischen von sogenannten "expandierbaren Mikrokügelchen" zum thermoplastischen Material durchgeführt werden. Expandierbare Mikrokügelchen sind seit langem bekannt. Hierzu wird eines der oben exemplifizierten, bevorzugt physikalischen Treibmittel (insbesondere ein nicht wasserlösliches, bei Raumtemperatur flüssiges Treibmittel wie etwa die vorstehend erwähnten Kohlenwasserstoffe, Hydrofluoralkane oder Chlorfluorkohlenwasserstoffe) mittels wässeriger Emulsionspolymerisation mit einer polymeren Hülle, etwa aus Copolymer von Acrylat/Methacrylat und Vinylchlorid, umgeben. Dabei wird das Treibmittel in der Polymerhaut verkapselt, unter Bildung der besagten Mikrokügelchen.

Für das Aufschäumen ist es einerseits bevorzugt, wenn entweder das Treibmittel in freier Form zum Thermoplasten gegeben wird und das Aufschäumen unter Verwendung der Extrusionsbeschichtung gleichzeitig unter Auftragen auf den ersten zugkörper durchgeführt wird. Andererseits ist es bevorzugt, das Aufschäumen getrennt in einem Extruder durchzuführen, wobei das Treibmittel in Form der vorstehend erwähnten expandierbaren Mikrokügelchen zugegeben wird, und die so erhaltene geschäumte erste Schicht anschliessend in einem zweiten Arbeitsgang mittels Kalandrieren auf den ersten Zugkörper aufgetragen wird.

Bei einem alternativen Verfahren zur Herstellung des erfindungsgemässen Laufbandes, das nur gerade einem ersten Zugkörper enthält (oder eines entsprechenden Halbfabrikates), wobei der Schaum der ersten geschäumten Schicht hauptsächlich, d.h. zu mindestens etwa 50%, PVC als Thermoplasten enthält, wird zunächst eine Dispersion des Thermoplasten in einem Weichmacher hergestellt, die auch ein Treibmittel in Art und Menge wie oben beschrieben enthält. Als Weichmacher eignen sich etwa Phthalat-Weichmacher (z.B. Dioctylphthalat, Diiso-heptylphtalat, Di-2-ethylhexylphthalat, Di-iso-octylphthalat, Dicyclohexylphthalat, Benzylbutylphtalat oder gemischte Diester der Phthalsäure mit $C_6$-$C_{11}$-Alkanolen, wobei das Alkanol primär oder sekundär sein kann); Phosphorsäureester (z.B. Tri-2-ethylhexlphosphat, Triheptylphosphat oder Tri-2-ethylpentylphosphat) oder niedrigviskose (d.h. bevorzugt <= 1000 mPa · s bei RT) Polyester, die aus $C_3$-$C_9$-Dicarbonsäuren (etwa Malonsäure, 1,4-Butandisäure, 1,5-Pentandisäure, Adipinsäure, Azelainsäure, Suberinsäure oder Sebacinsäure) und $C_3$-$C_8$-Alkandiolen (etwa 1,2-Propylenglykol, 1,3-Propylenglykol, 1,4-Butandiol) erhältlich sind. Der Dispersion können wahlweise auch weitere Zusätze wie Stabilisatoren, Pigmente oder Füllstoffe zugegeben werden. Eine solche Dispersion ist, abgesehen von dem zusätzlich enthaltenen Treibmittel, mit den in der Technik als Plastisole bekannten Dispersionen vergleichbar. Bei dieser vorgängig hergestellten Dispersion wird die Menge und Art des Weichmachers so gewählt, dass die Dispersion eine pastöse Konsistenz aufweist. Diese Dispersion wird gleichmässig, etwa mit einem Rakel oder mittels einer Beschichtungswalze, auf die Oberseite des ersten Zugkörpers aufgestrichen und die aufgestrichene Schicht durch Erhitzen bis auf den gewünschten Schäumungsgrad aufgeschäumt.

Nach dem Verbindung von erster geschäumter Schicht und erstem Zugkörper können die optionalen weiteren Lagen angebracht werden, ebenfalls mittels Kalandrieren, Extrusionsbeschichten oder Laminieren. Diese Verfahren sind alle an sich dem Fachman geläufig.

Das erfindungsgemässe Laufband ist endlos. Zum Erhalt dieses endlosen Laufbandes wird ein Schichtverbund, der bereits alle erforderlichen Lagen und Zugkörper (wie vorstehend beschrieben) aufweist, zunächst, sofern erforderlich, auf eine geeignete Länge zugeschnitten. Die so erhaltenen Enden könnten prinzipiell unter Verwendung aller auf dem Gebiet der Förderbänder bekannten Endverbindungen endverbunden werden, so etwa Fingerendverbindungen, Keilverbindungen, Überlappungsverbindungen und Stufenverbindungen.

Für erfindungsgemässe Laufbänder, die nur auf der Unterseite der ersten geschäumten Schicht einen Zugkörper aufweisen, ist aber die Fingerendverbindung bevorzugt. Die Fingerendverbindung ist auf dem Gebiet der Laufbänder bereits bekannt (siehe die eingangs zitierte US-A-5,951,441), so dass sich hier eine weitergehende Erörterung erübrigt.

Für erfindungsgemässe Laufbänder, die sowohl auf der Oberseite wie auch auf der Unterseite der ersten geschäumten Schicht einen Zugkörper aufweisen, ist andererseits aber die eingangs beschriebene und auf dem Gebiet der Förderbänder bekannte Stufenverbindung bevorzugt. Der Abstand d, um den die beiden Stirnflächen der einen Stufe eines Endes gegeneinander versetzt sind, kann, wenn er nicht Null ist, typisch im Bereich von etwa 5 bis 200 mm liegen; bevorzugt beträgt er etwa 30 bis 80 mm. Es ist eher bevorzugt, wenn die Stufenhöhe auf der Höhe der halben Banddicke liegt, so dass die Enden mit einer zusätzlichen Überlappung x (zusätzlich zum Abstand d) in Längsrichtung des Schichtkörpers überlappen können und trotzdem fugenlos aneinander gefügt werden können (siehe Einleitung). Diese zusätzliche Distanz x kann, wenn sie von Null verschieden ist, typisch im Bereich von etwa 2 bis 200 mm liegen; bevorzugt liegt sie im Bereich von etwa 2 bis 10 mm. Die vier Stirnflächen, die für eine Stufenverbindung benötigt werden (zwei Stirnflächen pro Ende, wovon die eine Stirnfläche um den besagten Abstand d gegenüber der anderen Stirnfläche stufenförmig rückversetzt ist) sind bevorzugt alle eben und parallel zueinander. Die Flächennormalen dieser vier ebenen Stirnflächen sind bevorzugt in einem Neigungswinkel $\alpha$ zur Längsrichtung des Schichtverbundes geneigt, wobei dieser Neigungswinkel in der Ebene der Unterseite der geschäumten ersten Schicht liegt. Dieser Neigungswinkel $\alpha$ liegt typisch im Bereich von etwa 10 bis 50 Grad, bevorzugt etwa 20 bis 40 Grad.

Die für das Zuschneiden der Enden benötigten Messer oder Fräsen und die für das Verschweissen/Verkleben benötigten Heizpressen sind fachüblich und bedürfen keiner weiteren Erläuterung.

Nach dem Aneinanderfügen der beiden Enden werden bei allen Endverbindungsarten die Enden unter Einwirkung von Wärme und Druck miteinander verbunden. Dabei kann der thermoplastische Schaum der geschäumten ersten Schicht als ein Schmelzkleber verwendet werden, und/oder es kann ein zusätzlicher üblicher Kleber mitverwendet werden. Dabei werden die Enden miteinander verklebt und/oder miteinander verschweisst. Vorzugsweise wird der thermoplastische Schaum als Schmelzkleber verwendet. Eher bevorzugt wird dabei kein zusätzlicher Kleber mitverwendet, so dass nur gerade der thermoplastische Schaum alleine als Klebemittel dient.

Im Folgenden wird das erfindungsgemässe Laufband und seine Herstellung unter Bezugnahme auf die beigefügten Figuren anhand von Ausführungsbeispielen detaillierter beschrieben. Es zeigen:

Figuren 1,2,3,4    vier erfindungsgemässe Varianten des erfindungsgemässen Laufbandes;

Figur 5    eine schematische Darstellung eines für die Herstellung der thermoplastischen Schäume verwendbaren Extruders;

Figur 6    schematisch das Herstellen eines erfindungsgemässen Laufbandes aus einem ersten geschäumten Schicht und einem ersten Zugkörper mittels Ka- landrieren, wobei anschliessend ein zweiter Zugkörper ebenfalls unter Ka- landrieren, angeordnet wird;

Figur 7    schematisch das Herstellen eines erfindungsgemässen Laufbandes aus ei- ner ersten geschäumten Schicht und einem ersten Zugkörper mittels Extru- sionsbeschichtung; und

Figuren 8, 9    Details der Enden und ihr Zusammenfü- gen für eine Stufenverbindung.

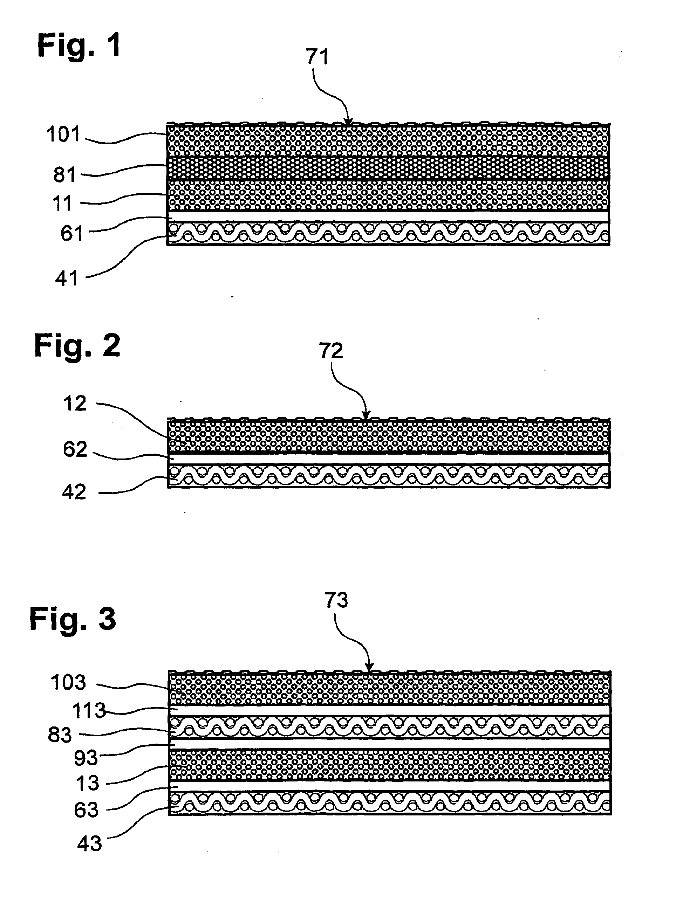

Das Laufband von Figur 1 weist einen ersten Zugkörper 41 auf, der an der Unterseite der geschäumten ersten Schicht 11 angeordnet ist, und einem zweiten Zugkörper 81, der an der Oberseite der geschäumten ersten Schicht 11 angeordnet ist. Der erste Zugkörper 41 besteht aus einem Gewebe mit Leinwandbindung, wobei sowohl Kett- als auch Schussfäden Multifilamente sind. Das Fasermaterial des ersten Zugkörpers 41 ist aus einem für Fasern geeigneten Polyamid; die Kettfäden können 550 oder 1100 dtex haben; die Schussfäden haben 1100 dtex. Die Dicke des ersten Zugkörpers 41 beträgt etwa 0,6 mm. Die geschäumte erste Schicht 11 besteht aus einem Schaum aus PVC mit einem Schäumungsgrad von etwa 20%, wobei die Schäumung mittels expandierbaren Mikrokügelchen bewirkt wurde. Die Dicke der ersten geschäumten Schicht 11 beträgt etwa 0,4 mm. Erste geschäumte Schicht 11 und erster Zugkörper 41 sind mittels eines duroplastischen Klebemittels 61 (quervernetztes Polyurethan) miteinander verklebt, etwa durch Kalandrieren. Der zweite Zugkörper 81 besteht aus einer Kettenwirkware. Das Fasermaterial des zweiten Zugkörpers 81 ist aus einem für Fasern geeigneten Polyamid und hat eine Dicke von etwa 0,3 mm. Zweiter Zugkörper 81 und erste geschäumte Schicht 11 sind ohne Verwendung eines zusätzlichen Klebers miteinander verbunden, etwa durch Aufkalandrieren. Auf dem zweiten Zugkörper 81 ist eine Oberschicht 101 aus einem geschäumten Thermoplasten angeordnet. Diese Oberschicht 101 weist die gleiche chemische Zusammensetzung auf wie die erste geschäumte Schicht 11. Diese Oberschicht 101 stellt mit ihrer Oberschichtenoberseite 71 die Lauffläche des Laufbandes dar. Die Dicke dieser Oberschicht 101 beträgt, je nach Art des auf der Oberschichtenoberseite 71 ausgebildeten rutschvermindernden Profils (in der Figur angedeutet), etwa 0,4 bis etwa 0,8 mm. Die Oberschicht 101 ist ohne Verwendung eines zusätzlichen Klebers an den zweiten Zugkörper 81 befestigt, etwa durch Aufkalandrieren.

Das Laufband von Figur 2 weist nur einen ersten Zugkörper 42 auf, der an der Unterseite der geschäumten ersten Schicht 12 angeordnet ist. Dieser erste zugkörper 42 besteht aus einem Gewebe mit Köperbindung, wobei sowohl Kett- als auch Schussfäden Multifilamente mit 1100 dtex sind. Das Fasermaterial des ersten Zugkörpers 42 ist aus einem für Fasern geeigneten Polyester. Die Dicke des ersten Zugkörpers 42 beträgt etwa 0,6 mm. Die geschäumte erste Schicht 12 besteht aus einem Schaum aus einem Ethylen-1-Octen-Copolymeren, das mittels "Single Site"-Katalysator hergestellt wurde; sein Schäumungsgrad beträgt etwa 20%, wobei die Schäumung mit einem physikalischen Treibmittel (Freon) bewirkt wurde. Bei diesem Bandaufbau ist die geschäumte erste Schicht 12 die oberste Schicht des Laufbandes; ihre Oberfläche 72 weist hierzu ein geeignetes rutschverminderndes Profil auf. Die Dicke der ersten geschäumten Schicht 12 beträgt, je nach Art dieses Profils, etwa 0,4 bis etwa 0,8 mm. Erste geschäumte Schicht 12 und erster Zugkörper 42 sind mittels eines duroplastischen Klebemittels 62 (quervernetzte Kautschukmischung) miteinander verklebt, etwa durch Extrusionsbeschichtung.

Das Laufband von Figur 3 weist einen ersten Zugkörper 43 auf, der an der Unterseite der geschäumten ersten Schicht 13 angeordnet ist, und einem zweiten Zugkörper 83, der an der Oberseite der geschäumten ersten Schicht 13 angeordnet ist. Der erste Zugkörper 43 besteht aus einem Gewebe mit Köperbindung, wobei die Kettfäden Multifilamente von 1000 dtex und die Schussfäden Monofilamente von 0,25 mm Durchmesser sind. Das Fasermaterial des ersten Zugkörpers 43 ist aus Baumwolle. Die Dicke des ersten Zugkörpers 43 beträgt etwa 0,6 mm. Die geschäumte erste Schicht 13 besteht aus einem Schaum aus TPU mit einem Schäumungsgrad von etwa 20%, wobei die Schäumung mittels expandierbaren Mikrokügelchen bewirkt wurde. Die Dicke der ersten geschäumten Schicht 13 beträgt etwa 0,35 mm. Erste geschäumte Schicht 13 und erster Zugkörper 43 sind mittels eines duroplastischen Klebemittels 63 (quervernetztes Polyurethan) miteinander verklebt, etwa durch Kalandrieren. Der zweite Zugkörper 83 besteht aus einem Gewebe mit Leinwandbindung, wobei die Kettfäden Multifilamente von 1000 dtex und die Schussfäden Monofilamente von. 0,25 mm Durchmesser sind. Das Fasermaterial des zweiten Zugkörpers 83 ist ebenfalls Baumwolle. Die Dicke des zweiten Zugkörpers beträgt etwa 0,6 mm bestimmen. Zweiter Zugkörper 83 und erste geschäumte Schicht 13 sind unter Verwendung eines duroplastischen Klebemittels 113 (quervernetztes Polyurethan) verbunden, etwa durch Aufkalandrieren. Auf dem zweiten Zugkörper 83 ist eine geschäumte thermoplastische Oberschicht 103 angeordnet, die gleich ist wie die Oberschicht der Figur 1, und die wiederum mit einem duroplastischen Klebemittel 93 (quervernetztes Polyurethan) mit dem zweiten Zugkörper 83 verbunden ist, etwa durch Kalandrieren.

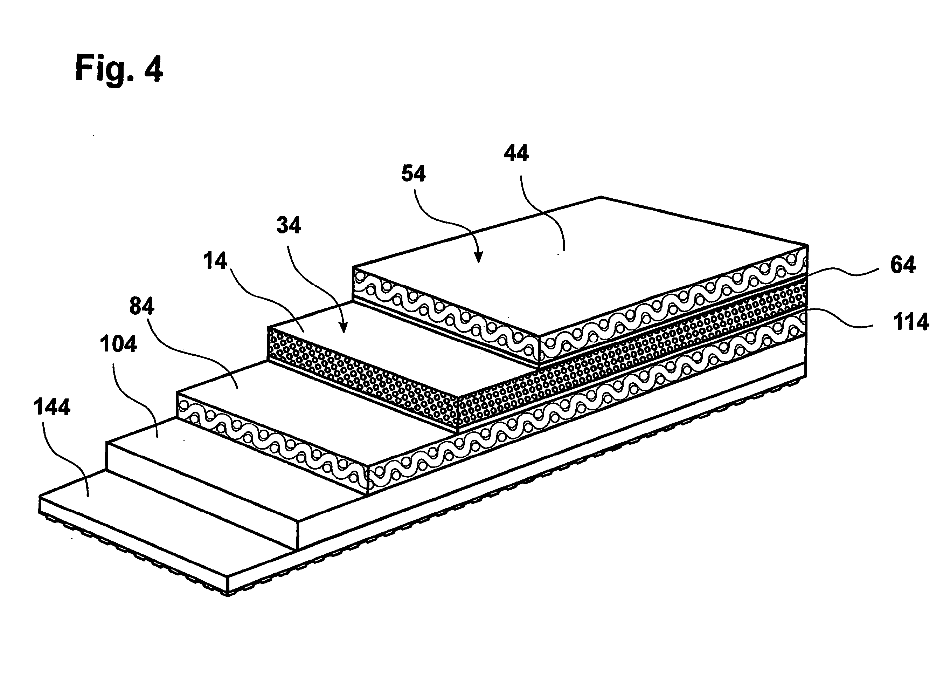

Das Laufband von Figur 4 ist von unten her gezeigt, so dass die Unterseite 34 der ersten geschäumten Schicht 14 sichtbar ist. Der Aufbau dieses Laufbandes ist gleich wie der Aufbau des Laufbandes von Figur 3, ausser dass auf der Oberschicht 104 (diese ist jetzt nicht mehr profiliert) eine zusätzliche profilierte dünne, antistatische Deckschicht 144 aus mit Graphitpulver vermischtem TPU aufgetragen ist.

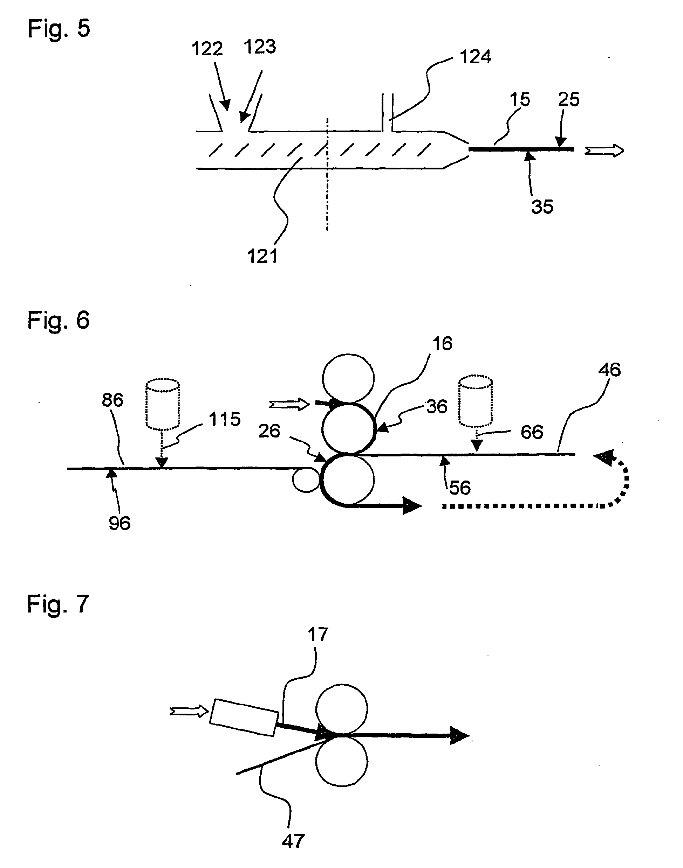

Figuren 5-7 illustrieren schematisch die Herstellung des Schichtverbundes, der das noch nicht endlose Laufband bildet.

Figur 5 zeigt die Herstellung einer geschäumten ersten Schicht 15 selber in einem Extruder 121: Der granulierte oder gemahlene, noch ungeschäumte Thermoplast 122 wird in dem Extruder 121 mit fakultativen weiteren Additiven 123, wie etwa Farbstoffen, Füllstoffen oder Flammhemmern gemischt. Wenn das Treibmittel leicht zu dosieren ist, z.B. wenn es fest ist, kann es zusammen mit dem Thermoplasten 122 und den Additiven 123 zugegeben werden. Wenn das Treibmittel gasförmig oder flüssig ist, kann es davon getrennt über eine Zuleitung 124 direkt in den Extruder 121 eingeführt werden. Diese Mischung aller Bestandteile wird soweit erhitzt und unter Druck gesetzt, dass das Treibmittel sich mit der bereits geschmolzenen Mischung durchmischt. In einigen Fällen kann die Durchmischung dergestalt durchgeführt werden, dass das Treibmittel in den superkritischen Zustand übergeführt wird. Die erhaltene Mischung von Thermoplast 122 und Treibmittel wird im Extruder 121 aufgeschäumt und dem Extruder 121 etwa über eine Runddüse als thermoplastischer Schaum entnommen (in Figur 5 als Umrisspfeil angegeben). Wenn eine Breitschlitzdüse verwendet wird, kann der Schaum direkt als erste geschäumte Schicht 15 mit einer Oberseite 25 und einer Unterseite 35 hergestellt werden.

Figur 6 zeigt schematisch das Aufkalandrieren von zwei Zugkörpern 46 bzw. 86 auf die Unterseite 36 bzw. Oberseite 26 einer ersten geschäumten Schicht 16. Es kann entweder eine erste geschäumte Schicht 16 oder auch noch ein relativ formloser thermoplastischer Schaum eingesetzt werden, da die Kalanderwalzen die endgültige Form der ersten geschäumten Schicht 16 erzwingen. Es wird zunächst an die Unterseite 36 der ersten geschäumten Schicht 16 ein erster Zugkörper 46 aufkalandriert. Sofern ein zusätzlicher Kleber 66 zum Verbinden von erster geschäumter Schicht 16 und erstem Zugkörper 46 benötigt wird, könnte dieser auf die Oberseite des Zugkörpers in Form eines Pulverharzes aufgestreut oder in Form einer Lösung in einem Lösungsmittel aufgesprüht oder mittels eines Rakels aufgestrichen werden, bevor der zugkörper 46 in das Walzenpaar eintritt. Gezeigt ist in der Figur auch, wie unmittelbar anschliessend ein zweiter Zugkörper 86 auf die Oberseite 26 der ersten geschäumten Schicht 16 aufkalandriert wird. Auch hier könnte gewünschtenfalls auf die Unterseite des zweiten Zugkörpers 86 ein zusätzlicher Kleber 115 aufgestreut oder aufgesprüht werden. Gezeigt ist des weiteren mit dem dicken gestrichelten Pfeil, dass der erhaltene Schichtverbund gewünschtenfalls mit weiteren Lagen beschichtet werden könnte: von rechts würde dann anstelle des ersten Zugkörpers 46 der bereits vorhandene Schichtverbund dem Kalander zugeführt, von links würde anstelle des zweiten Zugkörpers 86 die fragliche weitere Lage zugeführt. Je nach der Orientierung, wie der bereits vorhandene Schichtverbund in den Kalander geführt würde, würde diese weitere Lage unter dem ersten oder auf dem zweiten Zugkörper angeordnet.

Figur 7 zeigt schematisch eine Extrusionsbeschichtung eines ersten Zugkörpers 47 mit einer geschäumten ersten Schicht 17. Dabei wird zunächst ein thermoplastischer Schaum ähnlich wie bei Figur 5 beschrieben unter bevorzugter Verwendung von chemischen oder physikalischen Treibmitteln extrudiert, wobei aber keine Breitschlitzdüse erforderlich ist.

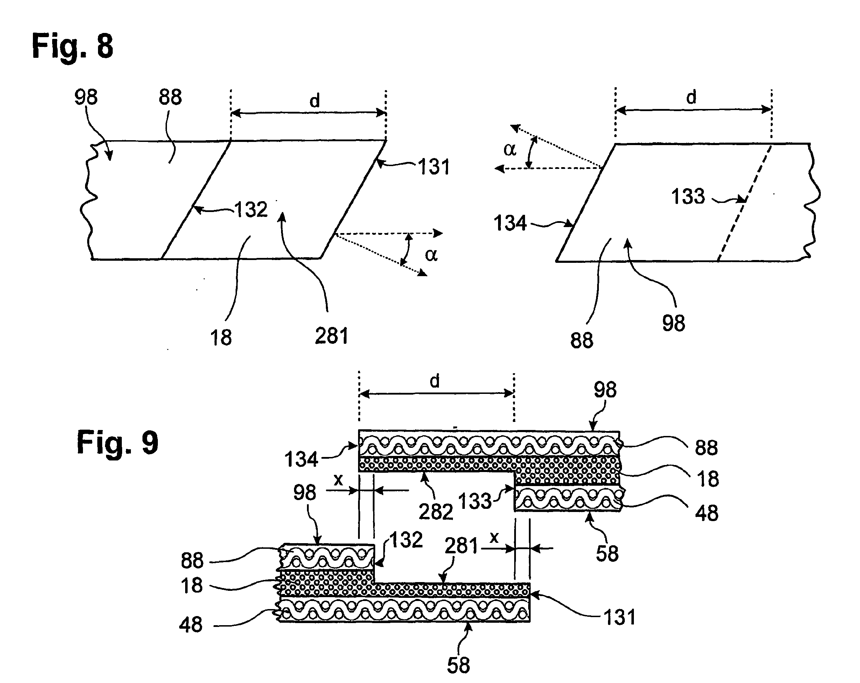

Figuren 8 und 9 illustrieren das Endlosmachen eines fertigen Schichtverbundes (d.h. eines noch nicht endlosen Laufbandes), der eine erste geschäumte Schicht 18 und zwei Zugkörper.48, 88 aufweist, und wobei die Endverbindung eine Stufenverbindung ist. Insbesondere oberhalb des zweiten Zugkörpers 88 könnten noch weitere Lagen vorhanden sein, diese sind aber in den Figuren 8 und 9 nicht dargestellt.

Der von oben gezeigte (Figur 8) Schichtverbund wird dabei zunächst auf eine gewünschte Länge zugeschnitten, so dass am einen Ende eine ebene erste Stirnfläche 131 und am anderen Ende eine ebene zweite Stirnfläche 134 entsteht. Diese beiden Stirnflächen 131, 134. sind abgeschrägt, dergestalt, dass ihre Flächennormalen (als kurzgestrichelte Pfeile gezeichnet) um einen Winkel $\alpha$ von etwa 30° gegenüber der Längsrichtung des Schichtverbundes (als langgestrichelte Pfeile angegeben) parallel zur Unterseite der ersten geschäumten Schicht 18 (d.h. in der Blattebene) abgewinkelt sind. Der Schichtverbund wird dann an den beiden Enden bis zu einem Abstand d in Längsrichtung aufgetrennt, etwa mit einem Messer, dergestalt, dass die erste geschäumte Schicht 18 auf halber Banddicke durchtrennt wird, unter Ausbildung einer ersten Trennoberfläche 281 und einer zweiten Trennoberfläche 282 (Figur 9). An dem links gezeigten Ende wird dann der zweite Zugkörper 88 (sowie allfällige oberhalb des zweiten Zugkörpers sich befindenden, in den Figuren 8 und 9 nicht gezeigte thermoplastische geschäumte oder ungeschäumte Lagen) und die erste geschäumte Schicht 18 um einen Abstand d gegenüber der Stirnfläche 131 rückversetzt und senkrecht durchschnitten, dergestalt, dass eine erste rückversetzte Stirnfläche 132 entsteht, die zur ersten Stirnfläche 131 parallel verläuft.und gegenüber dieser um einen Abstand d stufenförmig rückversetzt ist. An dem anderen Ende wird die erste geschäumte Schicht 18, der erste Zugkörper 48 (sowie allfällige unterhalb des ersten Zugkörpers sich befindenden, in den Figuren 8 und 9 nicht gezeigte Lagen) um denselben Abstand d gegenüber der Stirnfläche 134 rückversetzt und senkrecht durchschnitten, dergestalt, dass eine zweite rückversetzte Stirnfläche 133 entsteht, die zur zweiten Stirnfläche 134 parallel verläuft und gegenüber dieser um einen Abstand d stufenförmig rückversetzt ist. Die zweite rückversetzte Stirnfläche 133 ist in Figur 8 nur gestrichelt gezeichnet, da sie in der Draufsicht von dem zweiten Zugkörper 88 verdeckt wird. Das links gezeigte Ende weist eine von erster rückversetzter Stirnfläche 132, erster Trennoberfläche 281 und ersten Stirnfläche 131 gebildete Stufe auf; das rechts gezeigte Ende weist eine von zweiter Stirnfläche 134, zweiter Trennoberfläche 282 und zweiter rückversetzter Stirnfläche 133 gebildete Stufe auf.

Die beiden Enden werden dann um eine zusätzliche Distanz x von etwa 5 mm überlappend übereinander gelegt (Figur 9). Dabei bilden erste rückversetzte Stirnfläche 132, erste Trennoberfläche 281, zweite Trennoberfläche 282 und zweite rückversetzte Stirnfläche 133 einen im Inneren des Bandes liegenden Hohlraum. Die so aneinander gefügten Enden werden mittels einer Heizpresse verschweisst (d.h. im vorliegenden Fall ohne Mitverwendung eines zusätzlichen Klebers). Der thermoplastische Schaum an der ersten Trennoberfläche 281 verschmilzt dabei mit dem thermoplastischen Schaum an der zweiten Trennoberfläche 282. Weiterhin verschmilzt ein Teil des thermoplastischen Schaums an der ersten Trennoberfläche 281 mit der Unterseite des in Figur 9 rechts gezeigten Endes des Laufbandes (diese Unterseite ist hier gerade die Zugkörperunterseite 58, da keine weiteren unterhalb des ersten Zugkörpers 48 angeordneten Lagen vorhanden sind). Weiterhin verschmilzt ein Teil des thermoplastischen Schaums an der zweiten Trennoberfläche 282 mit der Laufoberfläche des in Figur 9 links gezeigten Endes des Laufbandes (diese Laufoberfläche ist hier gerade die Zugkörperoberfläche 98, da keine weiteren oberhalb des zweiten Zugkörpers 88 angeordneten Lagen vorhanden sind). Durch dieses Verschmelzen wird eine endlose erste geschäumte Schicht 18 erhalten.

Das erfindungsgemässe Laufband lässt sich in allen herkömmlichen Lauftrainingsgeräten einsetzen. Lauftrainingsgeräte, die das erfindungsgemässe Laufband enthalten, sind ebenfalls Gegenstand der Erfindung.

**Patentansprüche**

1. Endloses Laufband, bestehend aus einem Schichtverbund, der eine erste geschäumte Schicht (11, 12, 13, 14, 15, 16, 17, 18) aus einem thermoplastischen Schaum, mit einer Oberseite (25, 26) und einer Unterseite (34, 35, 36) und, auf der Unterseite (34, 35, 36) angeordnet, einen ersten Zugkörper (41, 42, 43, 44, 46, 47, 48) mit einer ersten textilen Schicht und einer Zugkörperunterseite (54, 56, 58) umfasst, wobei der Schichtverbund zwei endverbundene Enden aufweist, **dadurch gekennzeichnet, dass** die erste geschäumte Schicht (11, 12, 13, 14, 15, 16, 17, 18) endlos ist und dass zwischen ihr und dem ersten Zugkörper (41, 42, 43, 44, 46, 47, 48) keine Schicht angeordnet ist, die ein lokales scherendes Verschieben des ersten Zugkörpers (41, 42, 43, 44, 46, 47, 48) parallel zur Unterseite (34, 35, 36) verhindert oder diesen versteift.

2. Laufband nach Anspruch 1, **dadurch gekennzeichnet, dass** der erste Zugkörper (41, 42, 43, 44, 46, 47, 48) ein Gewebe enthält oder ein Gewebe ist, und dass der erste Zugkörper (41, 42, 43, 44, 46, 47, 48) mittels eines Klebers (61, 62, 63, 64, 66) an der Unterseite (34, 36) befestigt ist.

3. Laufband nach Anspruch 1 oder 2, **dadurch gekennzeichnet, dass** auf der Oberseite (26) ein zweiter Zugkörper (81, 83, 84, 86, 88), umfassend eine zweite textile Schicht und eine Zugkörperoberseite (96, 98), angeordnet ist, und dass zwischen der ersten geschäumten Schicht (11, 13, 14, 16, 18) und dem zweiten zugkörper (81, 83, 84, 86, 88) keine Schicht angeordnet ist, die ein lokales scherendes Verschieben des zweiten Zugkörpers (81, 83, 84, 86, 88) parallel zur Oberseite (26, 28) verhindert oder diesen versteift.

4. Laufband nach Anspruch 3, **dadurch gekennzeichnet, dass** der zweite Zugkörper (81, 86, 88) ein Gewirk enthält oder ein Gewirk ist, und dass der zweite Zugkörper (81, 86, 88) ohne Kleber an der Oberseite (26) befestigt ist.

5. Laufband nach Ansprüche 3, **dadurch gekennzeichnet, dass** der zweite Zugkörper (83, 86) ein Gewebe enthält oder ein Gewebe ist, und dass der zweite Zugkörper (83, 86) mittels eines Klebers (113, 114, 115) an der Oberseite (26) befestigt ist.

6. Laufband nach einem der Ansprüche 1 bis 5, **dadurch gekennzeichnet, dass** der thermoplastische Schaum der endlosen geschäumten ersten Schicht (11, 12, 13, 14, 15, 16, 17, 18) zu mindestens 50 Gewichtsprozenten, eher bevorzugt zu mindestens 75 Gewichtsprozenten, noch eher bevorzugt zu mindestens 90 Gewichtsprozenten und besonders bevorzugt zu mindestens 95 Gewichtsprozenten, bezogen auf die geschäumte erste Schicht (11, 12, 13, 14, 15, 16, 17, 18), aus einem Thermoplasten besteht.

7. Laufband nach Anspruch 6, **dadurch gekennzeichnet, dass** der Thermoplast aus der Gruppe bestehend aus PA, TPE-A, TPU, TPE-U, PVC, TPO, PE und TPE-E, ausgewählt ist.

8. Laufband nach Anspruch 7, **dadurch gekennzeichnet, dass** der Thermopast TPU oder PVC ist.

9. Laufband nach einem der Ansprüche 1 bis 8, **dadurch gekennzeichnet, dass** es durch Verschweissen der ersten geschäumten Schicht (11, 12, 13, 14, 15, 16, 17, 18) und/oder durch Verkleben, unter Verwendung des thermoplastischen Schaums der endlosen ersten geschäumten Schicht (11, 12, 13, 14, 15, 16, 17, 18) als Schmelzkleber, endlos gemacht ist.

10. Verfahren zur Herstellung des Laufbandes nach einem der Ansprüche 1 bis 9, umfassend die Schritte

    i) Herstellen einer geschäumten Schicht (15, 16, 17, 18) mit einer Oberseite (25, 26) und einer Unterseite (35, 36), indem eine thermoplastische Mischung, umfassend einen Thermoplasten (122), wahlweise Additive (123) und ein Treibmittel, mittels eines Extruders (121) aufgeschäumt wird;
    ii) Bereitstellen eines ersten Zugkörpers (46, 47, 48) wie in Anspruch 1 definiert, der zwei Enden aufweist;
    iii) Verbinden der Unterseite (35, 36) der ersten geschäumten Schicht (15, 16, 17, 18) mit dem ersten Zugkörper (46, 47, 48) mittels Wärme und Druck und/oder mittels eines Klebemittels (66), wodurch ein Schichtverbund mit zwei Enden erhalten wird;
    iv) Optionales Anordnen weiterer Lagen an den erhaltenen Schichtverbund, mittels Wärme und Druck und/oder mittels eines Klebemittels;
    v) Zuschneiden der beiden Enden des Schichtverbundes unter Ausbildung von mindestens einer Stirnfläche (131, 132) an dem einen Ende und von mindestens einer Stirnfläche (133, 134) an dem anderen Ende, dergestalt, dass mindestens eine der Stirnflächen des einen Endes fugenlos an eine der Stirnflächen des anderen Endes anliegen kann;
    vi) Aneinanderfügen der beiden Enden;
    vii) Endlosmachen des Schichtverbundes.

11. Verfahren nach Anspruch 10, **dadurch gekennzeichnet, dass**

    a) im Schritt iv) als weitere Lage ein zweiter Zugkörper (86, 88) wie in Anspruch 3 definiert an der Oberseite (25, 26) der geschäumten Schicht (16, 18) angeordnet wird; und
    b) im Schritt v) am einen Ende eine erste Stirnfläche (131) und eine erste rückversetzte Stirnfläche (132) engstehen und an dem anderen Ende eine zweite Stirnfläche (134) und eine zweite rückversetzte Stirnfläche (133) entstehen, dergestalt, dass die erste Stirnfläche (131) fugenlos an die zweite rückversetzte Stirnfläche (133) anliegen kann, und dass die erste rückversetzte Stirnfläche (132) fugenlos an die zweite Stirnfläche (134) anliegen kann.

12. Verfahren nach Anspruch 11, **dadurch gekennzeichnet, dass** die Schritte v), vi) und vii) unter Erhalt einer Stufenverbindung durchgeführt werden.

13. verfahren nach einem der Ansprüche 10 bis 12, **dadurch gekennzeichnet, dass** im Schritt vii) die erste geschäumte Schicht (15, 16, 17, 18) verschweist und/oder unter Verwendung des thermoplastischen Schaums der endlosen ersten geschäumten Schicht (15, 16, 17, 18) als schmelzkleber verklebt wird, wodurch das endlose Laufband erhalten wird.

14. verfahren nach Anspruch 13, **dadurch gekennzeichnet, dass** im Schritt vii) kein zusätzlicher Kleber mitverwendet wird.

15. Lauftrainingsgerät umfassend ein endloses Laufband nach einem der Ansprüche 1 bis 9.

**Claims**

1. An endless treadmill belt consisting of a layered composite comprising a first foamed layer (11, 12, 13, 14, 15, 16, 17, 18) of a thermoplastic foam with a top side (34, 35, 36) and a bottom side (34, 35, 36), a first traction layer (41, 42, 43, 44, 46, 47, 48) being arranged at the bottom side (34, 35, 36) and having a first textile layer and a traction layer bottom side (54, 56, 58), whereby the layered composite has two end-joined ends, **characterised in that** the first foamed layer (11, 12, 13, 14, 15, 16, 17, 18) is endless and **in that** between it and the first traction layer (41, 42, 43, 44, 46, 47, 48) there is not arranged a layer which precludes a localized shear displacement of the first traction layer (41, 42, 43, 44, 46, 47, 48) parallel to the bottom side (34, 35, 36) or which stiffens it.

2. The treadmill belt according to claim 1, **characterised in that** the first traction layer (41, 42, 43, 44, 46, 47, 48) contains a woven fabric or is a woven fabric and **in that** the first traction layer (41, 42, 43, 44, 46, 47, 48) is adhered to the bottom side (34, 36) by means of an adhesive (61, 62, 63, 64, 66).

3. The treadmill belt according to claim 1 or 2, **characterised in that** on the top side (26) there is arranged a second traction layer (81, 83, 84, 86, 88) comprising a second textile layer and a traction layer top side (96, 98) and **in that** between the first foamed layer (11, 13, 14, 16, 18) and the second traction layer (81, 83, 84, 86, 88) there is not arranged a layer which prevents a localized shear displacement of the second traction layer (81, 83, 84, 86, 88) parallel to the top side (26, 28) or which stiffens it.

4. The treadmill belt according to claim 3, **characterised in that** the second traction layer (81, 86, 88) contains a formed-loop knit fabric or is a formed-loop knit fabric and **in that** the second traction layer (81, 86, 88) is adhered to the top side (26) without adhesive.

5. The treadmill belt according to claim 3, **characterised in that** the second traction layer (83, 86) contains a woven fabric or is a woven fabric and **in that** the second traction layer (83, 86) is adhered to the top side (26) by means of an adhesive (113, 114, 115).

6. The treadmill belt according to any one of claims 1 to 5, **characterised in that** the thermoplastic foam of the endless foamed first layer (11, 12, 13, 14, 15, 16, 17, 18) is composed to at least 50 percent by weight, more preferably to at least 75 percent by weight, still more preferably to at least 90 percent by weight and particularly preferably to at least 95 percent by weight, based on the foamed first layer (11, 12, 13, 14, 15, 16, 17, 18), of a thermoplastic.

7. The treadmill belt according to claim 6, **characterised in that** the thermoplastic is selected from the group consisting of PA, TPE-A, TPU, TPE-U, PVC, TPO, PE and TPE-E.

8. The treadmill belt according to claim 7, **characterised in that** the thermoplastic is TPU or PVC.

9. The treadmill belt according to any one of claims 1 to 8, **characterised in that** it is made endless by welding together the first foamed layer (11, 12, 13, 14, 15, 16, 17, 18) and/or by adhering by using the thermoplastic foam of the endless first foamed layer (11, 12, 13, 14, 15, 16, 17, 18) as hotmelt adhesive.

10. A process for producing the treadmill belt according to any one of claims 1 to 9, comprising the steps of

i) producing a foamed layer (15, 16, 17, 18) having a top side (25, 26) and a bottom side (35, 36) by foaming a thermoplastic mixture comprising a thermoplastic (122), optional additives (123) and a blowing agent by means of an extruder (121);
ii) providing a first traction layer (46, 47, 48) as defined in claim 1, which has two ends;
iii) bonding the bottom side (35, 36) of the first foamed layer (15, 16, 17, 18) to the first traction layer (46, 47, 48) by means of heat and pressure and/or by means of an adhesive (66), to obtain a layered composite having two ends;
iv) optionally arranging further layers on the resulting layered composite by means of heat and pressure and/or by means of an adhesive;
v) cutting the two ends of the layered composite to form at least one end face (131, 132) at one end and at least one end face (133, 134) at the other end, such that at least one of the end faces of the one end can gaplessly abut one of the end faces of the other end;
vi) joining the two ends together;
vii) making the layered composite endless.

11. The process according to claim 10, **characterised in that**

a) in step iv) a second traction layer (86, 88) as defined in claim 3 is arranged as a further layer on the top side (25, 26) of the foamed layer (16, 18); and **in that**
b) in step v) a first end face (131) and a first set-back end face (132) are formed at the one end and a second end face (134) and a second set-back end face (133) are formed at the other end, such that the first end face (131) can gaplessly abut the second set-back end face (133) and the first set-back end face (132) can gaplessly abut the second end face (134).

12. The process according to claim 11, **characterised in that** steps v), vi) and vii) are carried out with obtention a step joint.

13. The process according to any one of claims 10 to 12, **characterised in that** in step vii) the first foamed layer (15, 16, 17, 18) is welded and/or is adhered using the thermoplastic foam of the endless first foamed layer (15, 16, 17, 18) as hotmelt adhesive, to obtain the endless treadmill belt.

14. The process according to claim 13, **characterised in that** no additional adhesive is co-used in step vii).

15. An exercise treadmill comprising an endless treadmill belt according to any one of claims 1 to 9.

## Revendications

1. Tapis roulant continu, consistant d'un assemblage de couches qui comprend une première couche expansée (11, 12, 13, 14, 15, 16, 17, 18) d'une mousse thermoplastique, avec un côté supérieur (25, 26) et un côté inférieur (34, 35, 36) et un premier corps de traction (41, 42, 43, 44, 46, 47, 48) disposé sur le côté inférieur (34, 35, 36) avec une première couche textile et un côté inférieur de corps de traction (54, 56, 58), l'assemblage de couches présentant deux extrémités reliées, **caractérisé en ce que** la première couche expansée (11, 12, 13, 14, 15, 16, 17, 18) est continue et **en ce qu'**entre elle et le premier corps de traction (41, 42, 43, 44, 46, 47, 48) n'est disposée aucune couche qui empêche un déplacement de cisaillement local du premier corps de traction (41, 42, 43, 44, 46, 47, 48) parallèlement au côté inférieur (34, 35, 36) ou le renforce.

2. Tapis roulant selon la revendication 1, **caractérisé en ce que** le premier corps de traction (41, 42, 43, 44, 46, 47, 48) contient un tissu ou est un tissu, et **en ce que** le premier corps de traction (41, 42, 43, 44, 46, 47, 48) est fixé au moyen d'un adhésif (61, 62, 63, 64, 66) au côté inférieur (34, 36).

3. Tapis roulant selon la revendication 1 ou 2, **caractérisé en ce qu'**un second corps de traction (81, 83, 84, 86, 88), comprenant une seconde couche textile et un côté supérieur de corps de traction (96, 98), est disposé sur le côté supérieur (26), et **en ce qu'**entre la première couche expansée (11, 13, 14, 16, 18) et le second corps de traction (81, 83, 84, 86, 88) n'est disposée aucune couche qui empêche un déplacement de cisaillement local du second corps de traction (81, 83, 84, 86, 88) parallèlement au côté supérieur (26, 28) ou le renforce.

4. Tapis roulant selon la revendication 3, **caractérisé en ce que** le second corps de traction (81, 86, 88) contient une maille ou est une maille, et **en ce que** le second corps de traction (81, 86, 88) est fixé sans adhésif au côté supérieur (26).

5. Tapis roulant selon la revendication 3, **caractérisé en ce que** le second corps de traction (83, 86) contient un tissu ou est un tissu, et **en ce que** le second corps de traction (83, 86) est fixé au moyen d'un adhésif (113, 114, 115) au côté supérieur (26).

6. Tapis roulant selon l'une quelconque des revendications 1 à 5, **caractérisé en ce que** la mousse thermoplastique de la première couche expansée continue (11, 12, 13, 14, 15, 16, 17, 18) consiste d'au moins 50 pourcent, de préférence d'au moins 75 pourcent, plutôt de préférence d'au moins 90 pourcent et de manière particulièrement préférée d'au moins 95 pourcent, par rapport à la première couche expansée (11, 12, 13, 14, 15, 16, 17, 18), d'un thermoplastique.

7. Tapis roulant selon la revendication 6, **caractérisé en ce que** le thermoplastique est sélectionné dans le groupe se composant du PA, TPE-A, TPU, TPE-U, PVC, TPO, PE et TPE-E.

8. Tapis roulant selon la revendication 7, **caractérisé en ce que** le thermoplastique est du TPU ou du PVC.

9. Tapis roulant selon l'une quelconque des revendications 1 à 8, **caractérisé en ce qu'**il est rendu continu par soudage de la première couche expansée (11, 12, 13, 14, 15, 16, 17, 18) et/ou par collage en utilisant la mousse thermoplastique de la première couche expansée continue (11, 12, 13, 14, 15, 16, 17, 18) comme colle fusible.

10. Procédé de fabrication du tapis roulant selon l'une quelconque des revendications 1 à 9, comprenant les étapes suivantes:

   i) fabriquer une couche expansée (15, 16, 17, 18) avec un côté supérieur (25, 26) et un côté inférieur (35, 36) en faisant mousser un mélange thermoplastique comprenant un thermoplastique (122), éventuellement des additifs (123), et un agent propulseur, au moyen d'une extrudeuse (121),
   ii) mettre à disposition un premier corps de traction (46, 47, 48) comme défini dans la revendication 1 présentant deux extrémités,
   iii) relier le côté inférieur (35, 36) de la première couche expansée (15, 16, 17, 18) au premier corps de traction (46, 47, 48) au moyen de chaleur et de pression et/ou au moyen d'un adhésif (66), ce qui permet d'obtenir un assemblage de couches avec deux extrémités,
   iv) éventuellement disposer d'autres couches sur l'assemblage de couches obtenu au moyen de chaleur et de pression et/ou au moyen d'un adhésif,
   v) couper les deux extrémités de l'assemblage de couches en réalisant au moins une surface frontale (131, 132) sur l'une extrémité et au moins une surface frontale (133, 134) sur l'autre extrémité de telle manière qu'au moins l'une des surfaces frontales de l'une extrémité puisse reposer sans joints sur l'une des surfaces frontales de l'autre extrémité,
   vi) assembler les deux extrémités,
   vii) faire continu l'assemblage de couches.

11. Procédé selon la revendication 10, **caractérisé en ce que**

   a) à l'étape iv), un second corps de traction (86, 88) comme défini à la revendication 3, est disposé en tant qu'autre couche sur le côté supérieur (25, 26) de la couche expansée (16, 18) et
   b) à l'étape v), une première surface frontale (131) et une première surface frontale en retrait (132) sont formées sur l'une extrémité et une seconde surface frontale (134) et une seconde surface frontale en retrait (133) sont formées sur l'autre extrémité de telle manière que la première surface frontale (131) puisse reposer sans joints sur la seconde surface frontale en retrait (133) et **en ce que** la première surface frontale en retrait (132) puisse reposer sans joints sur la seconde surface frontale (134).

12. Procédé selon la revendication 11, **caractérisé en ce que** les étapes v), vi) et vii) sont réalisées en obtenant une liaison étagée.

**13.** Procédé selon l'une quelconque des revendications 10 à 12, **caractérisé en ce qu'** à l'étape vii), la première couche expansée (15, 16, 17, 18) est soudée et/ou est collée en utilisant la mousse thermoplastique de la première couche expansée continue (15, 16, 17, 18) comme colle fusible, ce qui permet d'obtenir le tapis roulant continu.

**14.** Procédé selon la revendication 13, **caractérisé en ce qu'**à l'étape vii), aucun adhésif supplémentaire n'est utilisé.

**15.** Appareil d'entraînement roulant comprenant un tapis roulant continu selon l'une quelconque des revendications 1 à 9.

## Fig. 1

## Fig. 2

## Fig. 3

Fig. 4

Fig. 5

122  123                    124                        15      25

                                                                ⇨

                                                        35

121

Fig. 6

                                    16
                                                        46

86                              36
        115          26              66
                                    56

96

Fig. 7

                    17

⇨

                47

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5951441 A
- US 20060287147 A